# EUROPEAN PATENT APPLICATION

(11) **EP 0 983 818 A2**
(43) Date of publication of application: **08.03.2000**
(21) Application number: 99115719.9
(22) Date of filing: 10.08.1999
(51) Int. Cl.: B23K 9/32

(54) **Tig-welding torch with spherical joint for connection to power cable**

(30) Priority: 04.09.1998 IT VI980069
(71) Applicant: TRAFIMET S.P.A., 36020 Castegnero (VI) (IT)
(72) Inventor: Zigliotto, Giuseppe, 36023 Longare VI (IT)
(74) Representative: La Ciura, Salvatore

(57) **Abstract**

TIG-welding torch, characterised in that it includes a spherical joint (14), fitted to the rear of the torch handgrip (2), for connection of the power cable (7), the power cable sheath (12) being attached to the said spherical joint.

## Description

This invention relates to a TIG-welding torch which includes a spherical joint for connection to the power cable, and in which the cooling fluid return pipe is made of conductive material and used to carry current to the torch.

The purpose of the invention is to increase the convenience and practicality of TIG-welding torches by supplying a torch which is more manageable than those currently available.

For this reason, the torch in accordance with the invention is particularly advantageous in the field of quality welding, such as that performed in the jewellery and dental fields, etc.

In welders, the torch used to perform welding operations is connected to the generator by a power cable that carries the welding current.

This cable, which connects the handle of the torch to the coupling on the generator, comprises a conductor of suitable dimensions to supply welding current of sufficient intensity, one or more cables that carry the torch control signals to the generator and, in some cases, a gas supply pipe and cooling fluid supply pipes.

For example, a TIG-welding torch will be connected to pipes for the supply and return of a cooling fluid, which may be air or water, and these pipes further increase the bulk and rigidity of the supply cable.

All these cables and pipes are enclosed in a protective sheath, with the result that the torch cable, which has a diameter of 2 or 3 centimetres, is somewhat rigid and consequently difficult to manoeuvre.

This drawback can make the welding operation rather difficult, particularly in the case of TIG welding, in which numerous, continual movements of the hand are required, especially in the field of quality welding, such as that performed in the jewellery and dental fields, etc.

In these cases, easy manoeuvrability of the torch is obviously of crucial importance, but it is prevented or made difficult by the rigidity of the power cable and the protective sheath, which are directly connected to the torch body.

Various solutions aimed at making the cable more flexible have been devised in an attempt to minimise this problem.

Thus the thinnest possible cables have been made of flexible material such as rubber and the like, but always with unsatisfactory results.

On the one hand, the dimensions of the assembly cannot be reduced beyond a certain limit because the cross-sections of the electric power cable and the fluid supply pipes cannot be reduced; equally, if cables are made with a sheath that is too thin or flexible, there is a risk that they will bend too much, causing constriction of the pipes inside them, which cuts off the supply of cooling fluids and/or gas.

The present invention, which offers a TIG-welding torch with a spherical joint for connection to the power cable, falls into this sector.

In this way, the torch can be used at different inclinations with no need to bend the cable excessively, thus partly solving the problem described above.

The idea of fitting a spherical coupling to a welding torch is already known, and was described, for example, in application no. PD 94U 000057 by the same applicant.

However, this known application relates to a continuous-wire welding torch, ie. a different type from TIG or plasma welding torches.

A spherical joint never appears to have been used before to connect the power cable to a TIG or plasma torch.

This invention will now be described in detail, by way of example but not of limitation, by reference to the annexed figures in which:
- Figure 1 is a side view of a TIG-welding torch in accordance with the invention
- Figure 2 is a cross-section of the torch shown in figure 1, in correspondence with the power cable coupling
- Figures 3 and 4 show a torch in accordance with the invention, in correspondence with the cable coupling, in exploded and perspective view respectively
- Figure 5 shows a cross-section of a torch power cable in accordance with the invention.

By reference to the annexed figures, no. 1 indicates the TIG-welding torch assembly, which comprises a handgrip 2 with a control button 3, a tip 4 with a welding nozzle 5, and a coupling for a power cable 7, the coupling assembly being indicated as 6.

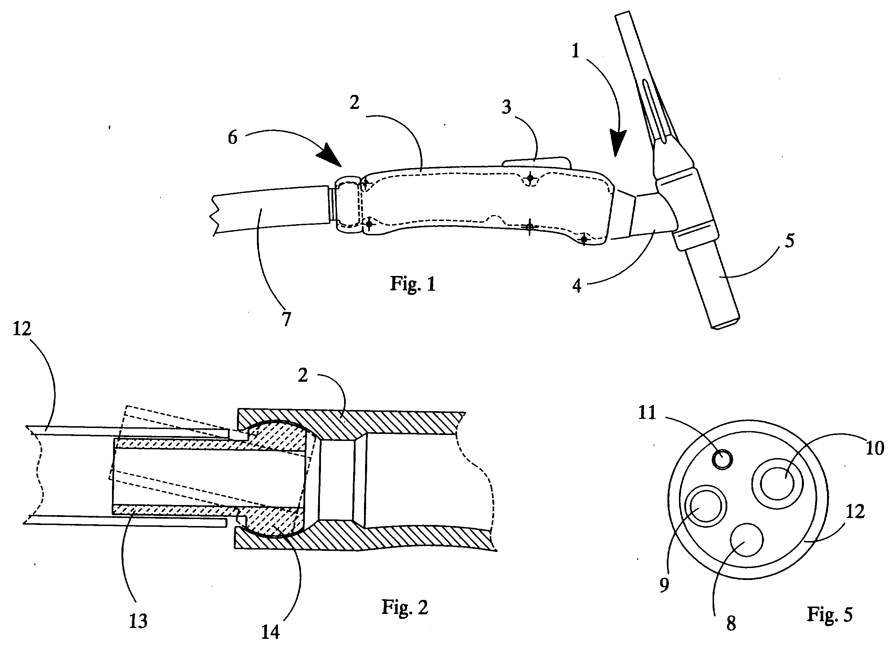

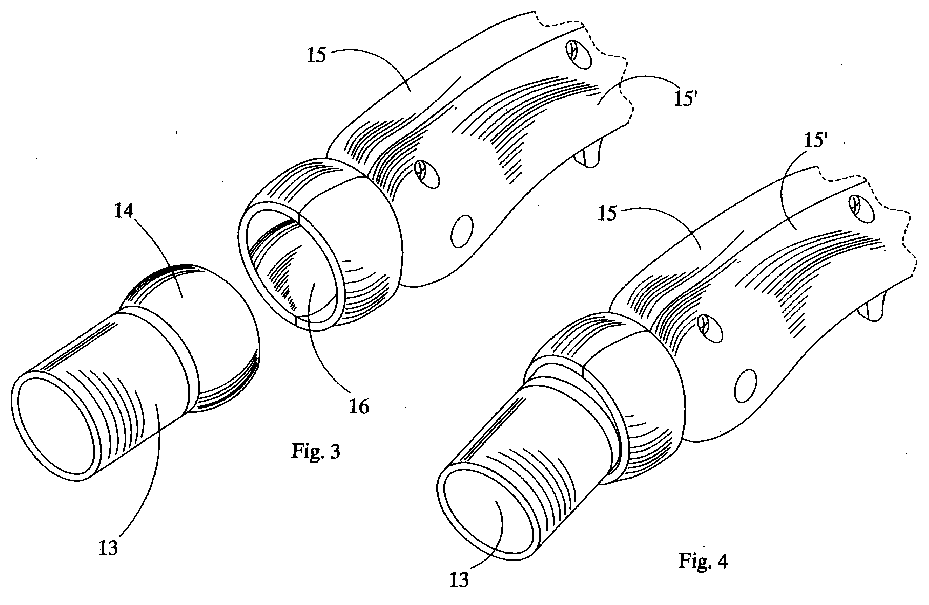

In particular (see Fig. 5) power cable 7 comprises a first gas supply pipe 8, a cooling fluid delivery pipe 9, a cooling fluid return pipe 10 and a control signal cable 11.

Cooling fluid return pipe 10 is made of an electrically conductive material, and is also used to supply current to the torch.

The walls of pipe 10 will consequently have a cross-section sufficient to transfer a current of the required intensity.

Pipe 10 could be made, for example, of copper braid lined with a suitable waterproof material.

The pipes and cables are enclosed in a protective sheath 12.

With this system, the torch cooling fluid also cools the electricity supply cable during its return.

A characteristic feature of the invention is that sheath 12 is attached to a sleeve 13 integral with a spherical joint 14 which is inserted into torch handgrip 2.

For this purpose, the handgrip will advantageously be constituted by a pair of symmetrical half-shells 15 and 15' which are shaped to form a spherical seating 16 in the rear section suitable to receive joint 14.

On installation, the shells are clamped round joint 14, which thus remains inserted in its seating and allows limited angular movements of the torch in any direction in relation to the power cable.

During use, this characteristic will mean better manageability of the torch and therefore greater practicality.

In particular, as sheath 12, which was previously connected to the body of the torch, is now connected to the spherical joint, it is no longer liable to bend at the point of connection to the handgrip.

The same system could also be usefully employed in the case of plasma cutting torches, with the same advantages as described above.

The dimensions and the materials used can obviously vary in accordance with practical requirements.

## Claims

1. TIG-welding torch, characterised in that it includes a spherical joint (14), fitted to the rear of the torch handgrip (2), for connection of the power cable (7), the power cable sheath (12) being attached to the said spherical joint.

2. TIG-welding torch as claimed in claim 1, characterised in that the handgrip consists of two half-shells shaped to form a seating at the rear end suitable to house the said spherical joint, the said half-shells being clamped round the said joint to hold it in the said seating.

3. TIG-welding torch as claimed in the preceding claims, characterised in that one of the cooling fluid supply pipes is used to carry electrical current to the torch.

4. Plasma torch, characterised in that it includes a spherical joint, fitted to the rear of the torch handgrip, for connection of the power cable, the power cable sheath being attached to the said spherical joint.
